(19) Europäisches Patentamt
European Patent Office
Office européen des brevets

(11) Veröffentlichungsnummer: **0 164 492 B1**

# (12) EUROPÄISCHE PATENTSCHRIFT

(45) Veröffentlichungstag der Patentschrift: **28.08.91**

(51) Int. Cl.5: **C01B 31/10**

(21) Anmeldenummer: **85101594.1**

(22) Anmeldetag: **14.02.85**

## (54) Aktivkohle und das Verfahren zu ihrer Herstellung.

(30) Priorität: **16.05.84 DE 3418150**

(43) Veröffentlichungstag der Anmeldung:
**18.12.85 Patentblatt 85/51**

(45) Bekanntmachung des Hinweises auf die Patenterteilung:
**28.08.91 Patentblatt 91/35**

(84) Benannte Vertragsstaaten:
**BE DE FR GB IT NL**

(56) Entgegenhaltungen:
**DD-A- 138 013**
**DE-C- 524 614**
**US-A- 3 764 561**

**ULLMANS ENZYKLOPÄDIE DER TECHNISCHEN CHEMIE, 4. Auflage, Band 14, 1977, Seiten 622,623,625,626, Verlag Chemie, Weinheim, DE**

(73) Patentinhaber: **Degussa Aktiengesellschaft**
**Weissfrauenstrasse 9**
**W-6000 Frankfurt am Main 1(DE)**

(72) Erfinder: **Karl, Alfons, Dr.**
**Herzbergstrasse 59**
**W-6466 Gründau 1(DE)**
Erfinder: **Walter, Erwin**
**Karlstrasse 33**
**W-6460 Gelnhausen(DE)**
Erfinder: **Kleinschmit, Peter, Dr.**
**Wildaustrasse 19**
**W-6450 Hanau 9(DE)**
Erfinder: **Gottschlich, Hermann**
**Breslauer Strasse 16**
**W-5790 Brilon(DE)**
Erfinder: **Kutz, Roland, Dr.**
**Westfalenstrasse 6**
**W-4800 Bielefeld 14(DE)**
Erfinder: **Koth, Detlev, Dr.**
**Karlesberg 8**
**W-8752 Mömbris(DE)**

**EP 0 164 492 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, die Aktivierung von Braunkohlenkoks in einem Drehrohr nach dem Zusatz von 25 %iger wässriger Kaliumcarbonatlösung durchzuführen (vgl. Chem.Techn. 34 (1982) 290-300).

Aus Ullmann's Enzyklopädie der technischen Chemie 4. Auflage, 14. Band, Seiten 623, 625 und 626 ist die Gasaktivierung von Braunkohlenkoks unter Zusatz von festem oder in Wasser gelöstem Kaliumcarbonat vor der Aktivierung bekannt.

Aus der DE-PS 524 614 ist ein Verfahren zur Herstellung aktiver Kohle bekannt, bei dem man die kohlenstoffhaltigen Ausgangsstoffe vor oder während der Aktivierung mit im allgemeinen 1 % nicht übersteigenden Mengen von Alkalien oder alkalisch wirkenden Stoffen behandelt.

Die bekannten Verfahren haben den Nachteil, daß besonders feinporige Aktivkohlen nicht zu erhalten sind.

Bei bekannten Verfahren wird der Braunkohlenkoks in der wässrigen Katalysatorlösung vor der eigentlichen Aktivierung suspendiert. Hierdurch wird eine nicht zu kontrollierende Menge an Katalysator von dem Braunkohlenkoks aufgenommen. Dabei kann die Menge an aufgenommenem Katalysator je nach Qualität des Braunkohlenkoks schwanken. Der derart imprägnierte Braunkohlenkoks wird bei bekannten Verfahren abfiltriert, getrocknet und der eigentlichen Aktivierung unterworfen.

Aufgrund der nicht genau kontrollierbaren Aufnahme an Katalysator ist die reproduzierbare Herstellung einer vorgegebenen Aktivkohlequalität nicht möglich.

Weiterhin haben die nach bekannten Verfahren hergestellten Aktivkohlen den Nachteil, daß sie sich nicht mit besonderem Erfolg bei der Entfernung von Chlorkohlenwasserstoffen bei der Aufbereitung von Trinkwasser aus Grundwasser oder bei der Aufbereitung von Abwasser einsetzen lassen.

Gegenstand der Erfindung ist eine Aktivkohle hergestellt aus Braunkohlenkoks , der die folgenden physikalischen und chemischen Eigenschaften aufweist:

| Körnung | mm | Braunkohlenfeinkoks 0,5 - 4,0 | |
|---|---|---|---|
| **Kornzusammensetzung:** | | | |
| >4,00 mm | Gew.-% | - | |
| 4,00 - 3,15 mm | Gew.-% | 5,0 | |
| 3,15 - 2,00 mm | Gew.-% | 25,0 | |
| 2,00 - 1,00 mm | Gew.-% | 48,0 | |
| 1,00 - 0,50 mm | Gew.-% | 22,0 | |
| <0,50 mm | Gew.-% | - | |
| | | 100,0 | |
| **Immediatanalyse:** | | | |
| Wassergehalt | Gew.-% | 2,5 | ± 1,5 |
| Aschegehalt | Gew.-% | 7,0 | ± 1,5 |
| Fl.Bestandteile | Gew.-% | 3,0 | ± 0,5 |
| Fixer Kohlenstoff | Gew.-% | 87,5 | ± 3,0 |
| Heizwert (Hu) | kcal/kg | 7.150 | ± 200 |
| | KJ/kg | 30.000 | ± 850 |
| **Elementaranalyse (waf):** | | | |
| Kohlenstoff | Gew.-% | 88,2 | ± 1,0 |
| Wasserstoff | Gew.-% | 0,6 | ± 0,2 |
| Schwefel | Gew.-% | 0,4 | ± 0,15 |
| Sauerstoff } Stickstoff } | Gew.-% | 0,8 | ± 0,4 |

Oxidanalyse der Koksasche:

| | | |
|---|---|---|
| $SiO_2$ | Gew.-% | 6,0 ± 4,0 |
| $Al_2O_3$ | Gew.-% | 6,0 ± 3,0 |
| $Fe_2O_3$ | Gew.-% | 16,0 ± 8,0 |
| $SO_3$ | Gew.-% | 16,0 ± 4,0 |
| CaO | Gew.-% | 37,5 ± 7,5 |
| MgO | Gew.-% | 16,0 ± 4,0 |
| $Na_2O$ } | Gew.-% | 2,5 ± 1,0 |
| $K_2O$ } | Gew.-% | |

Physikalische Kennziffern:

| | | |
|---|---|---|
| Wahre Dichte | g/cm³ | 1,75 ± 0,1 |
| Schüttdichte | g/cm³ | 0,50 ± 0,05 |
| Spezifische Oberfläche | m²/g | 200 ± 50 |
| Reaktionsfähigkeit | cm³ $CO_2$/g.sec | 2,8 |
| Elektrischer Widerstand | Ohm.cm | 0,25 |
| Zündpunkt | °C | 320 ± 20 |
| Druckfestigkeit | daN/cm² | - - - |

Ascheschmelzverhalten in schwach reduzierender Atmosphäre:

| | | |
|---|---|---|
| Sinterpunkt | °C | ca. 1.050 |
| Erweichungspunkt | °C | ca. 1.440 |
| Halbkugelpunkt | °C | ca. 1.560 |
| Schmelzpunkt | °C | ca. 1.620 |

und gekennzeichnet durch das Produkt aus Melassezahl mal Jodzahl dividiert durch 1000 gleich 350 bis 1000 und das Produkt aus Melassezahl mal Methylenblautiter dividiert durch 10 gleich 500 bis 1200.

Diese Charakterisierung ist bezeichnend für die spezifische Kombination aus feinen und groben Poren bei der erfindungsgemäßen Aktivkohle.

Die erfindungsgemäße Aktivkohle weist vorteilhafterweise bessere Adsorptionseigenschaften bei der Trinkwasseraufbereitung aus Grundwasser bzw. der Aufbereitung von Abwasser auf. Vorallem werden Chlorkohlenwasserstoffe ausgezeichnet adsorbiert und damit aus dem Wasser entfernt. Aufgrund der höheren Abriebhärte sind die erfindungsgemäßen Aktivkohlen besser regenerierbar.

Besonders vorteilhaft kann die erfindungsgemäße Aktivkohle zur Wasseraufbereitung zu Trinkwasser eingesetzt werden.

Ein weiterer Gegenstand der Erfindung ist ein Verfahren zur Herstellung der Aktivkohle aus Braunkohlenkoks, der die folgenden physikalischen und chemischen Eigenschaften aufweist:

| Körnung | mm | Braunkohlenfeinkoks 0,5 - 4,0 |
|---|---|---|
| Kornzusammensetzung: | | |
| >4,00 mm | Gew.-% | - |
| 4,00 - 3,15 mm | Gew.-% | 5,0 |
| 3,15 - 2,00 mm | Gew.-% | 25,0 |
| 2,00 - 1,00 mm | Gew.-% | 48,0 |
| 1,00 - 0,50 mm | Gew.-% | 22,0 |
| <0,50 mm | Gew.-% | - |
| | | 100,0 |
| Immediatanalyse: | | |
| Wassergehalt | Gew.-% | 2,5 ± 1,5 |
| Aschegehalt | Gew.-% | 7,0 ± 1,5 |
| Fl.Bestandteile | Gew.-% | 3,0 ± 0,5 |
| Fixer Kohlenstoff | Gew.-% | 87,5 ± 3,0 |
| Heizwert (Hu) | kcal/kg | 7.150 ± 200 |
| | KJ/kg | 30.000 ± 850 |
| Elementaranalyse (waf): | | |
| Kohlenstoff | Gew.-% | 88,2 ± 1,0 |
| Wasserstoff | Gew.-% | 0,6 ± 0,2 |
| Schwefel | Gew.-% | 0,4 ± 0,15 |
| Sauerstoff } Stickstoff | Gew.-% Gew.-% | 0,8 ± 0,4 |

Oxidanalyse der Koksasche:

| | | |
|---|---|---|
| $SiO_2$ | Gew.-% | 6,0 ± 4,0 |
| $Al_2O_3$ | Gew.-% | 6,0 ± 3,0 |
| $Fe_2O_3$ | Gew.-% | 16,0 ± 8,0 |
| $SO_3$ | Gew.-% | 16,0 ± 4,0 |
| CaO | Gew.-% | 37,5 ± 7,5 |
| MgO | Gew.-% | 16,0 ± 4,0 |
| $Na_2O$ } | Gew.-% | 2,5 ± 1,0 |
| $K_2O$ } | Gew.-% | |

Physikalische Kennziffern:

| | | |
|---|---|---|
| Wahre Dichte | $g/cm^3$ | 1,75 ± 0,1 |
| Schüttdichte | $g/cm^3$ | 0,50 ± 0,05 |
| Spezifische Oberfläche | $m^2/g$ | 200 ± 50 |
| Reaktionsfähigkeit | $cm^3 CO_2/g.sec$ | 2,8 |
| Elektrischer Widerstand | Ohm.cm | 0,25 |
| Zündpunkt | °C | 320 ± 20 |
| Druckfestigkeit | $daN/cm^2$ | - - - |

Ascheschmelzverhalten in schwach reduzierender Atmosphäre:

| | | |
|---|---|---|
| Sinterpunkt | °C | ca. 1.050 |
| Erweichungspunkt | °C | ca. 1.440 |
| Halbkugelpunkt | °C | ca. 1.560 |
| Schmelzpunkt | °C | ca. 1.620 |

bei der das Produkt aus Melassezahl mal Jodzahl dividiert durch 1000 gleich 350 bis 1000 und das Produkt aus Melassezahl mal Methylenblautiter dividiert durch, 10 gleich 500 bis 1200 beträgt, wobei man Braunkohlenkoks mit Wasserdampf in einem Drehrohr aktiviert und während der Aktivierungsphase wässrige Alkali- oder Erdalkalicarbonatlösung und/oder wässrige Alkali- oder Erdalkalihydroxidlösung mittels einer Lanze in das Drehrohr einsprüht, wobei die Aktivierungstemperaturen in Fließrichtung des Aktivates (Braunkohlenkoks) im vorderen Teil des Drehrohrofens zwischen 900 und 1045 °C, im mittleren Teil zwischen 905 und 1055 °C und im hinteren Teil zwischen 880 und 995 °C liegen.

In einer bevorzugten Ausführungsform der Erfindung kann man als Alkalicarbonat Kaliumcarbonat bzw. als Alkalihydroxid Kaliumhydroxid einsetzen.

Die Kaliumkonzentration kann, bezogen auf die eingesetzte Braunkohle 1,0 bis 8,0 Gew.-%, vorzugsweise 1,5 bis 6,0 Gew.-%, betragen.

Als Ausgangsrohstoff wird bei dem erfindungsgemäßen Verfahren Braunkohlenkoks eingesetzt. Dieser Braunkohlenkoks kann in Bezug auf die folgenden Daten charakterisiert werden:

| | | |
|---|---|---|
| Körnung | : | 0,5 - 4,0 mm |
| Aschegehalt | : | 7,0 ± 1,5 Gew.-% |
| Flüchtige Bestandteile | : | 3,0 ± 0,5 Gew.-% |
| Fixer Kohlenstoff | : | 87,5 ± 3,0 Gew.-% |
| Schüttdichte | : | 0,50 ± 0,05 g/ml |

Wesentlich ist u.a. die besondere Körnung des Braunkohlenkokses. So kann beispielsweise feingepulverter Braunkohlenkoks bei dem erfindungsgemäßen Verfahren im Drehrohr nicht eingesetzt werden.

Das erfindungsgemäße Aktivierungsverfahren wird in einem Drehrohr durchgeführt. In bekannter Weise wird die Beheizung des Drehrohres mit einem Gasbrenner, in dem z.B. Flüssiggas wie Butan oder Propan verbrannt wird, durchgeführt. Als Aktivierungsmittel wird Wasserdampf in bekannter Weise in das Drehrohr eingeführt.

Als Katalysator kann wässrige Kaliumcarbonatlösung, oder wäßrige Kaliumhydroxidlösung, vorzugsweise in einer Konzentration von 10 bis 50 Gew.-%, eingesetzt werden.

Die Zugabe der wässrigen Alkali- oder Erdalkalicarbonat- bzw. hydroxidlösung kann erfindungsgemäß über eine Lanze, die als Einstoffdüse oder Zweistoffdüse ausgebildet ist, erfolgen. Mittels dieser Lanze wird die wässrige Katalysatorlösung während der Aktivierung auf den Braunkohlenkoks in dem Drehrohr aufgesprüht.

Bevorzugt wird die Katalysatorlösung in dem in Fließrichtung des Aktivates (Braunkohlenkoks gesehen) vorderen Teil des Drehrohrofens zugesetzt.

In einer besonders bevorzugten Ausführungsform wird die Katalysatorlösung in dem Kopf des Drehrohrofens zugesetzt.

Die Aktivierungstemperaturen können bei dem erfindungsgemäßen Verfahren in Fließrichtung des Aktivates (Braunkohlenkoks) im vorderen Teil des Drehrohrofens zwischen vorzugsweise 1000 - 1020 °C, im mittleren Teil zwischen vorzugsweise 960 - 980 °C,und im hinteren Teil zwischen vorzugsweise 920 - 940 °C liegen.

Das erfindungsgemäße Verfahren hat den Vorteil, daß die Zugabe der Katalysatorlösung gezielt in der Menge, bezogen auf die eingesetzte Menge an Braunkohlenkoks, gesteuert werden kann.

Bei dem erfindungsgemäßen Verfahren entfallen vorteilhafterweise die Filtrier-und Trockenstufe, die bei bekannten Aktivierungsverfahren, die die Imprägnierstufe verwenden, notwendig sind.

Beispiele 1 und 2

Braunkohlenkoks mit den folgenden, in der Tabelle 1 aufgeführten, physikalisch-chemischen Daten.:

Tabelle 1

| Körnung | mm | 0,5 - 4,0 |
|---|---|---|
| **Kornzusammensetzung:** | | |
| 〉4,00 mm | Gew.-% | - |
| 4,00 - 3,15 mm | Gew.-% | 5,0 |
| 3,15 - 2,00 mm | Gew.-% | 25,0 |
| 2,00 - 1.00 mm | Gew.-% | 48,0 |
| 1,00 - 0,50 mm | Gew.-% | 22,0 |
| - 〈0,50 mm | Gew.-% | - |
| | | 100,0 |
| **Immediatanalyse:** | | |
| Wassergehalt | Gew.-% | 2,5 ± 1,5 |
| Aschegehalt | Gew.-% | 7,0 ± 1,5 |
| Fl.Bestandteile | Gew.-% | 3,0 ± 0,5 |
| Fixer Kohlenstoff | Gew.-% | 87,5 ± 3,0 |
| Heizwert (Hu) | kcal/kg | 7.150 ± 200 |
| | KJ/kg | 30.000 ± 850 |
| **Elementaranalyse (waf):** | | |
| Kohlenstoff | Gew.-% | 88,2 ± 1,0 |
| Wasserstoff | Gew.-% | 0,6 ± 0,2 |
| Schwefel | Gew.-% | 0,4 ± 0,15 |
| Sauerstoff } Stickstoff | Gew.-% | 0,8 ± 0,4 |
| **Oxidanalyse der Koksasche:** | | |
| $SiO_2$ | Gew.-% | 6,0 ± 4,0 |
| $Al_2O_3$ | Gew.-% | 6,0 ± 3,0 |
| $Fe_2O_3$ | Gew.-% | 16,0 ± 8,0 |
| $SO_3$ | Gew.-% | 16,0 ± 4,0 |
| CaO | Gew.-% | 37,5 ± 7,5 |
| MgO | Gew.-% | 16,0 ± 4,0 |
| $Na_2O$ } $K_2O$ | Gew.-% | 2,5 ± 1,0 |

Physikalische Kennziffern:

| | | |
|---|---|---|
| Wahre Dichte | Gew.-% | 1,75 ± 0,1 |
| Schüttdichte | $g/cm^3$ | 0,50 ± 0,05 |
| Spezifische Oberfläche | $m^2/g$ | 200 ± 50 |
| Reaktionsfähigkeit | $cm^3 CO_2/g.sec$ | 2,8 |
| Elektrischer Widerstand | Ohm.cm | 0,25 |
| Zündpunkt | °C | 320 ± 20 |
| Druckfestigkeit | $daN/cm^2$ | - - - |

Ascheschmelzverhalten in schwach reduzierender Atomsphäre:

| | | |
|---|---|---|
| Sinterpunkt | °C | ca. 1.050 |
| Erweichungspunkt | °C | ca. 1.440 |
| Halbkugelpunkt | °C | ca. 1.560 |
| Schmelzpunkt | °C | ca. 1.620 |

wird in einem Drehrohrofen mit Wasserdampf aktiviert. Als Katalysator wird wässrige Kaliumcarbonat oder wässrige Kaliumhydroxidlösung über eine mit einer Einstoffdüse ausgestatteten Lanze am Kopf des Drehrohrofens hinzugegeben. Der Austrag des fertigen Aktivates erfolgt über ein Trompetenrohr in Fließrichtung des Aktivats (Braunkohlenkoks) am hinteren Ende des Drehrohrofens. Als Brenngas wird Flüssiggas (Propan/Butan) eingesetzt.

Die einzelnen Daten der Beispiele sind in der Tabelle 2 aufgeführt:
Die angegebenen Daten beziehen sich auf die unter industriellen Bedingungen wassergewaschene Aktivkohle mit einem Aschgehalt von 10 bis 15 Gew.-%

Tabelle 2

| | Beispiel 1 | Beispiel 2 | Beispiel 3 | Beispiel 4 | Aktierung im Drehrohofen |
|---|---|---|---|---|---|
| Kohlendurchsatz kg/h | 300 | 500 | 300 | 400 | |
| Katalysator | 25%ig $K_2CO_3$ | 25%ig $K_2CO_3$ | 50%ig KOH | 50%ig KOH | wässrige Lösung Gew.-% |
| Kat.-Konzentration Gew.-% | 5,2 | 3,4 | 5,0 | 5,0 | bezogen auf eingesetzte Kohle |
| Kaliumkonzentration Gew.-% | 2,9 | 1,9 | 3,5 | 3,5 | bezogen auf eingesetzte Kohle |
| Zugabeart | Lanze | Lanze | Lanze | Lanze | |
| Ofen-Ausbeute Gew.-% | 39 | 61 | 43 | 54 | bezogen auf ungewaschnene Aktivkohle |
| Ofentemperaturen °C | | | | | |
| $T_1$ | 990 (975-1005) | 950 (900-1005) | 1000 - 1020 | 1005 (950-1025) | |
| $T_2$ | 945 (925-965) | 990 (915-1020) | 960 - 980 | 955 (910- 990) | |
| $T_3$ | 935 (910-965) | 960 (905- 985) | 920 - 940 | 900 (825- 925) | |
| Mittl. Ofentempera. °C | 955 | 970 | 970 | 950 | |
| Gasmenge $m^3/h$ | 58 | 60 | 75 | 70 | Butan/Propan-Gas im Verhältnis 8:2 |
| Brennerluft-Menge $m^3/h$ | 500 | 500 | 500 | 500 | |
| Dampfmenge kg/h | 700 | 640 | 700 | 650 | |
| Zusatzluft-Menge $m^3/h$ | 80 | 80 | 80 | 280 | zugeführt am Ofenkopf |
| Zug (Sekundärluft) mmWS | 3,0 | 2,9 | 2,5 | 3,0 | Unterdruck im Drehrohr |
| Methylenblautiter ml/0.1g | 19,5 | 9,5 | 18,5 | 14,5 | |
| Jodzahl mg/1.0g | 1070 | 630 | 1025 | 900 | Prüfvorschriften werden im |
| Melasse-Zahl mg | 450 | 680 | 440 | 550 | folgenden beschrieben |
| Benzolbeladungen Gew.-% | | | | | Bestimmung nach v.Kienle/Bäder |
| p/po 9/10 | 49,1 | 29,6 | 48,3 | 39,7 | "Aktivkohle und ihre industrielle Anwendung (1980) S. 71 |
| 1/10 | 35,5 | 19,8 | 35,0 | 28,5 | |
| 1/100 | 23,9 | 15,6 | 23,2 | 20,1 | |
| Melasse x Jodzahl/1000 | 482 | 428 | 451 | 495 | |
| Melasse x MBL/10 | 878 | 646 | 814 | 798 | |

Tabelle 2-Fortsetzung

| | Beispiel 1 | Beispiel 2 | Beispiel 3 | Beispiel 4 |
|---|---|---|---|---|
| Aschegehalt Ge.-% | | | 12,7 | |
| Rüttelddichte g/l | | | 395 | |
| Abriebhärte Gew.-% | | | 87,4 | |
| Stoßhärte Gew.-% | | | 71,3 | |
| Phenolbeladung Gew.-% | | | | |
| bei 1,0 mg Rest | | | 4,6 | |
| bei 0,1 mg Rest | | | 2,5 | |

Die erhaltenen Aktivkohlen weisen die folgenden Produkte aus Melassezahl mal Jodzahl dividiert durch 1.000 auf:

| | |
|---|---|
| Beispiel 1 | 482 |
| Beispiel 2 | 428 |

Das Produkt aus Melassezahl mals Methylenblauzahl dividiert durch 10 beträgt:

| | |
|---|---|
| Beispiel 1 | 878 |
| Beispiel 2 | 646 |

Beispiele 3 und 4

Braunkohlenkoks - wie in den Beispielen 1 bis 4 eingesetzt - wird in einem Drehrohrofen mit Wasserdampf aktiviert.

Als Katalysator wird wässrige Kaliumhydroxidlösung über eine mit einer Einstoffdüse ausgestatteten Lanze am Kopf des Drehrohrofens hinzugegeben.

Der Austrag des fertigen Aktivates erfolgt über ein Trompetenrohr in Fließrichtung des Aktivates (Braunkohlenkoks) am hinteren Ende des Drehrohrofens. Als Brenngas wird Flüssiggas (Propan/Butan) eingesetzt.

Die einzelnen Daten sind in der Tabelle 2 aufgeführt: Die angegebenen Daten beziehen sich auf die unter industriellen Bedingungen wassergewaschene Aktivkohle mit einem Aschegehalt von 10 bis 15 Gew.-%.

Die erhaltenen Aktivkohlen weisen die folgenden Produkte aus Melassezahl mal Jodzahl dividiert durch 1000 auf:

| | |
|---|---|
| Beispiel 3 | 451 |
| Beispiel 4 | 495 |

Das Produkt aus Melassezahl mal Methylenblauzahl dividiert durch 10 beträgt:

| | |
|---|---|
| Beispiel 3 | 814 |
| Beispiel 4 | 798 |

Die Bestimmung der Melassezahl in den Beispielen 1 bis 4 erfolgt auf die folgende Weise:

Bestimmung der Entfärbungsleistung von Aktivkohle aus Melasse (LAT vom 29.09.1982)

1. Vorbemerkung:

Zur Kennzeichnung der Adsorptionskapazität von für die Anwendung in der Flüssigphase vorgesehene Aktivkohlen dient u.a. die Entfärbung von Melasselösung. Die zu untersuchende Kohle wird hierzu stets in Pulverform angewendet. Kornkohlen werden auf eine Korngröße 100 % < 0,1 mm, mind. 60 % < 40 $\mu$m, (Prüfsieb DIN 4188) gemahlen. Als Vergleichsmaßstab wird die Entfärbungsleistung einer Standard-Kohle benutzt.

2. Prüfmelasse:

Die Auswahl und Eichung einer geeigneten Melasse wird für alle Parteien vom LAT vorgenommen. Sie

muß bezüglich Eigenschaften und Farbstoffzusammensetzung bestimmten Anforderungen entsprechen.

3. Standardkohlen:

Als Standardkohlen werden folgende Kohlen in ungetrocknetem Zustand verwendet und mit der zu untersuchenden Kohle verglichen:

a) Haupt-Standard-Carboraffin Wi-La-Me A 167:
(Bezeichnung Labor Ffm); 200 mg Trockensubstanz

b) Sekundär-Standard-Carboraffin:
Eine gegen den Hauptstandard geeichtes Carboraffin mit gleicher Entfärbungsleistung

Diese Standard-Kohlen gewährleisten Vergleichbarkeit der Ergebnisse aus den verschiedenen Labors der Partner des LAT. Grundsätzlich kann auch auf einen anderen Standard bezogen werden. Dann ist jedoch die Vergleichbarkeit nicht mehr gegeben.

4. Farbmessung:

Die Entfärbung der Melasselösung wird optisch gemessen. Hierzu können folgende Geräte verwendet werden:

a) Lange-Kolorimeter mit 34,4 mm Küvette und zugehörigem Wärmeschutzfilter. Anstelle des Original-Wärmeschutzfilters kann auch ein Filter der Glassorte KG 3 der Firma Schott & Fen., Mainz, Dicke 5 mm, verwendet werden.

b) das Lange-Fotometer LP 1 W mit 4 cm Küvette und der im LB-Nr. 25 330 angegebenen Filterkombination, nämlich
6 + 1 mm KG 3
+ 1,4 mm KG 9
+ 1 mm BG 38

Andere Küvettenlängen als die angegebenen und andere Filter sind nicht zulässig, da sonst abweichende Ergebnisse erhalten werden.

5. Einstellung der Melasselösung und Durchführung der Entfärbung:

42 g Prüfmelasse (Zuckerfabrik Wabern 1976/77) werden eingewogen, mit dest. Wasser von Zimmertemperatur verdünnt, mit 0,1 n NaOH oder 0,1 n HCl auf den pH-Wert 7,0 ± 0,1 eingestellt und auf 1,0 Liter aufgefüllt. Nun fügt man 20 ml einer $NaH_2PO_4/Na_2HPO_4$-Pufferlösung vom pH 7,0 hinzu. Die Melasselösung muß nach 10-minütigem Erwärmen im Wasserbad auf 80-82° C den pH-Wert 7,0 ± 0,1 besitzen. Die Lösung wird anschließend (ohne weitere Filtration) zur Ermittlung der Entfärbungskraft von Aktivkohle benutzt.

Hierbei wird die jeweils festgesetzte Menge Aktivkohle in ungetrocknetem Zustand mit 100 ml der vorgewärmten Melasselösung in einem Porzellanbecher von 300 ml angerührt und 10 Minuten lang in einem Thermostaten unter mehrfachem Schütteln oder Rühren auf 80-82° C gehalten. Anschließend wird der pH-Wert der Suspension nach Entnahme aus dem thermostatisierten Wasserbad innerhalb von 5 Minuten mit einer pH-Einstabmeßkette bestimmt und, falls erforderlich, durch Zugabe von 2 n-NaOH oder HCl wieder auf den Wert 7,0 ± 0,1 gebracht. Die Feineinstellung wird mit 0,1 n-NaOH oder 0,1 n-HCl vorgenommen.

Die Temperatur der Suspension soll bei der pH-Messung im Bereich 70° C liegen. Das pH-Meter wird auf die Mitteltemperatur 75° C eingestellt. Die pH-Einstabmeßkette muß zum Einsatz in Suspension in diesem Temperaturbereich geeignet sein.

Anschließend wird die heiße Lösung durch ein Faltenfilter (Firma Schlei und Schüll Nr. 602 1/2h) filtriert und das Filtrat, nachdem die Lösung vollständig durchgelaufen ist, noch zweimal über das gleiche Filter zurückgegossen. Nach Abkühlung auf ≤ 30° C, spätestens nach 2 Stunden, wird die Extinktion der Lösung gemessen. Vor der Messung wird der PH-Wert an Stichproben, optimal an allen nachgestellten Lösungen nochmals überprüft und ggf. durch weitere Zugabe von n/10 NaOH oder HCl auf den Wert 7,0 ± 0,1 eingestellt.

Zur Qualitätskontrolle der verwendeten Melasse wird bei jeder Aktivkohleprüfung eine 100 ml-Probe ohne Anwendung von Aktivkohle mitbehandelt und durch Faltenfilter Nr. 602 1/2h (Firma Schleicher u. Schüll) filtriert. Nach der Filtration, durch die in der Melasselösung ausgeflockte Erdalkaliphosphate entfernt wurden, ist die Lösung absolut blank. Sie muß im Lange-Kolorimeter (Schichtdicke 34,4 mm Wärmeschutzfilter) eine Extinktion von 0,76-0,80 aufweisen, um den Qualitätsanforderungen zu entsprechen (bei Verwendung anderer Küvettenlängen entsprechend einer Extinktion/cm von 0,22-0,23).Werden die angegebenen Extinktionswerte nicht erreicht, muß die Prüfmelasse-Einwaage verändert werden.

6. Ermittlung der Melassezahl über die Melasseisotherme

Zur Bestimmung der Melasseisotherme werden von jeder Prüfkohle und von der Standardkohle je 5 Punkte, wie unter 5. angegeben, gemessen, mit z.B. 0,2, 0,4, 0,6, 0,8 und 1,2 g Aktivkohleeinwaage auf 100 ml Prüflösung. Je nach zu erwartender Entfärbungsleistung können auch geringe oder höhere Kohleeinwaagen gewählt werden.

Die Auswertung erfolgt graphisch, indem man die Meßpunkte der Prüfkohle und der Standard-Kohle auf doppeltlagorithmischem Koordinationspapier mit der Restextinktion als Abszissenmaßstab und der Beladung der Aktivkohle als Ordinatenmaßstab einträgt. Die Meßpunkte jeder Kohle bilden annähernd eine Gerade (Melasseisotherme). Aus den Melasseisothermen bestimmt man, wie unten angegeben, als Kennzahlen den Melassefaktor und die Melassezahl.

Da die adsorbierten Farbstoffmenge nur durch die Extinktion der Lösung nicht aber gewichtsmäßig erfaßt werden kann, gibt man die Beladung vereinfach als $\frac{\Delta E}{g}$ an.

Hierin bedeutet:

E = $E_o$ - E = Extinktionsdifferenz
$E_o$ = Extinktion ohne Aktivkohle
E = Extinktion nach Aktivkohleanwendung
g = Aktivkohleeinwaage in Gramm

Zur Ermittlung des Melassefaktors liest man aus den Isothermen bei einer Ext. von 0,38 (Lange-Kolorimeter) = Ext/cm von 0,11 die Beladung der Standardkohle und der Prüfkohle ab und bildet den Quotienten:

$$\text{Melassefaktor} = \frac{\text{Beladung d. Standardkohle}}{\text{Beladung d. Prüfkohle}}$$

Die richtige Dimension der Beladung bei Verwendung der Extinktion als Konzentrationsmaß ist:

$$\text{Beladung} = \frac{\Delta E \cdot V}{1 \cdot g}$$

Für die Melasseistoherme gilt annähernd die Freundlichsche Isothermengleichung:

$$\frac{\Delta E \cdot V}{1 \cdot g} = K \cdot E^n$$

Hierin bedeuten:

v = Lösungsvolumen
l = Küvettenlänge
K = Konstante der Freundlich-Gleichung
n = Exponent der Freundlich-Gleichung

Da Prüfkohle und Standardkohle unter gleichen Bedingungen (Lösungsvolumen, Küvettenlänge) gemessen werden, kann man bei der Bestimmung von Melasse-Faktor bzw. -Wert durch l u. V kürzen. Es ist daher zulässig, die Beladung vereinfacht als $\frac{\Delta E}{g}$ anzugeben.

Die Melassezahl erhält man durch Multiplikation des Melassefaktors mit der Standardkohle-Einwaage (mg):

Melassezahl = Melassefaktor x 200 mg

Die Melassezahl gibt an, wieviel Milligramm der zu prüfenden Aktivkohle erforderlich sind, um denselben Melasse-Entfärbungsgrad wie mit 200 mg der Haupt-Standard-Aktivkohle zu erreichen.

Die Bestimmung der Jodzahl in den Beispielen 1 bis 4 erfolgt auf die folgende Weise: Man bestimmt diejenige Menge Jod, die aus einer wässrigen Jodlösung unter bestimmten Bedingungen von 1 g Aktivkohle adsorbiert werden. Der erhaltene Wert ist ein Maß für die gesamte wirksame Oberfläche der Aktivkohle.

Ausführung:

10 g Aktivkohle werden in einer Labormühle soweit pulverisiert, daß 80 - 90 % durch ein 40 µm-Sieb nach DIN 4188 gehen. Danach wird 3 Stunden bei 150 °C im Trockenschrank getrocknet.

Von der getrockneten Kohle werden 1 g analytisch genau eingewogen, in einen 250 ml-Erlenmeyer-Schliffkolben gegeben und mit 10 ml HCl 5 %ig versetzt.

Man erhitzt zum Sieden und beläßt 30 Sekunden bei der Siedetemperatur.

Nach dem Abkühlen auf Raumtemperatur werden 100 ml 0,1 n Jodlösung in den Kolben gegeben. Man verschließt die Flasche und schüttelt intensiv 30 Sekunden.

Nach dem Schütteln wird durch ein trockenes Faltenfilter filtriert. Der Rückstand auf dem Filter wird nicht ausgewaschen.

Die ersten 20 - 30 ml des Filtrats werden verworfen. Das Restfiltrat wird in ein Becherglas gegeben und mit einem Glasstab homogenisiert.

50 ml des Filtrats werden in einem 250 ml-Erlenmeyer-Kolbengegeben und mit 0,1 n $Na_2S_2O_3$-Lösung titriert bis die Farbe der Lösung hellgelb ist.

Danach werden 2 ml der gesättigten Stärkelösung zugegeben und bis zum Verschwinden der blauen Farbe titriert.

Berechnung:

$$X = \frac{1269 - 27,918 \cdot V}{E}$$

X = Jodzahl in mg Jod/1 g Aktivkohle
E = Aktivkohleeinwaage (g)
V = Verbrauch an 0,1 n $Na_2S_2O_3$-Lösung (ml)

Die Restkonzentration in der Lösung errechnet sich folgendermassen (ausgedrückt als Nomalität):

$$C = \frac{0,1 \cdot V}{50} = 0,002 \cdot V$$

Die Restkonzentration des Filtrats muß bei 0,02 n liegen.

Ansonsten muß die gesamte Bestimmung mit anderer Einwaage wiederholt werden. Es besteht jedoch auch die Möglichkeit, Restkonzentrationen von 0,008 n bis 0,035 n mit Hilfe von Korrekturfaktoren auf die Restkonzentration 0,2 n umzurechnen.

Die Bestimmung des Methylenblautiter in den Bespielen (Entfärbung von Methylenblaulösung durch Aktivkohlen)

Die Bestimmung erfolgt in Anlehnung an die Vorschrift des DAB VII, zweiter Nachtrag 1975
Es wird ermittelt, wieviel ml Methylenblaulösung mit einer bestimmten Aktivkohlemenge in vorgegebener Zen vollständig entfärbt werden.

Hierzu wird eine Methylenblaulösung 0,15 %ig (3 g cm/21) wie folgt hergestellt.

3,0 g Methylenblau (nach DAB VII) werden in einem 21-Meßkolben in 1000 ml $H_2O$ dest. unter 8-stündigem Erwärmen bei ca. 40 °C gelöst. Nach dem Abkühlen wird auf 2 1 aufgefüllt. Die zu verwendende Lösung sollte ca. 20 °C haben.

Ausführungsbestimmung:

0,1 g trockene pulverförmige Aktivkohle, in einer Labormühle soweit vermahlen, daß 80 - 90 % durch ein 40 µm-Sieb nach DIN 4188 gehen oder die 0,1 g trockene Kohle entsprechende Handelsware werden analytisch genau eingewogen und in einen 50 ml-Meßzylinder mit Schliffstopfen gegeben.

Während genau 5 Minuten wird portionsweise unter ständigem Schütteln soviel Methylenblaulösung zugegeben, daß vollständige Entfärbung eintritt.

Die danach abgelesene Zahl der Milliliter Methylenblaulösung ist der ungefähre Wert Methylenblauzahl.

Zwei weitere Proben mit 1 ml weniger bzw. 1 ml mehr der o.g. gefundenen Anzahl ml Methylenblaulösung werden genau 5 Minuten geschüttelt.

Bei der ersten Probe sollte vollständige Entfärbung eintreten, während die zweite noch schwach blau erscheinen darf.

Sind beide Proben entfärbt, so ist solange jeweils mit 1 ml mehr Methylenblaulösung 5 Minuten zu schütteln, bis eine Probe noch schwach blau erscheint.

Als Methylenblautiter wird dann die Anzahl der ml Methylenblaulösung angegeben, die zwischen der letzten vollständig entfärbten Probe und der ersten blau erscheinenden Probe liegt. Er wird angegeben in ml entfärbte 0,15 %ige Methylenblaulösung pro 0,1 g Aktivkohle.

## Patentansprüche

1. Aktivkohle hergestellt aus Braunkohlenkoks , der die folgenden physikalischen und chemischen Eigenschaften aufweist:

| | | Braunkohlenfeinkoks |
|---|---|---|
| Körnung | mm | 0,5 - 4,0 |
| Kornzusammensetzung: | | |
| >4,00 mm | Gew.-% | - |
| 4,00 - 3,15 mm | Gew.-% | 5,0 |
| 3,15 - 2,00 mm | Gew.-% | 25,0 |
| 2,00 - 1,00 mm | Gew.-% | 48,0 |
| 1,00 - 0,50 mm | Gew.-% | 22,0 |
| <0,50 mm | Gew.-% | - |
| | | 100,0 |
| Immediatanalyse: | | |
| Wassergehalt | Gew.-% | 2,5 ± 1,5 |
| Aschegehalt | Gew.-% | 7,0 ± 1,5 |
| Fl.Bestandteile | Gew.-% | 3,0 ± 0,5 |
| Fixer Kohlenstoff | Gew.-% | 87,5 ± 3,0 |
| Heizwert (Hu) | kcal/kg | 7.150 ± 200 |
| | KJ/kg | 30.000 ± 850 |
| Elementaranalyse (waf): | | |
| Kohlenstoff | Gew.-% | 88,2 ± 1,0 |
| Wasserstoff | Gew.-% | 0,6 ± 0,2 |
| Schwefel | Gew.-% | 0,4 ± 0,15 |
| Sauerstoff } Stickstoff | Gew.-% | 0,8 ± 0,4 |

Oxidanalyse der Koksasche:

| | | |
|---|---|---|
| $SiO_2$ | Gew.-% | 6,0 ± 4,0 |
| $Al_2O_3$ | Gew.-% | 6,0 ± 3,0 |
| $Fe_2O_3$ | Gew.-% | 16,0 ± 8,0 |
| $SO_3$ | Gew.-% | 16,0 ± 4,0 |
| CaO | Gew.-% | 37,5 ± 7,5 |
| MgO | Gew.-% | 16,0 ± 4,0 |
| $Na_2O$ } | Gew.-% | 2,5 ± 1,0 |
| $K_2O$ } | Gew.-% | |

Physikalische Kennziffern:

| | | |
|---|---|---|
| Wahre Dichte | g/cm³ | 1,75 ± 0,1 |
| Schüttdichte | g/cm³ | 0,50 ± 0,05 |
| Spezifische Oberfläche | m²/g | 200 ± 50 |
| Reaktionsfähigkeit | cm³ $CO_2$/g.sec | 2,8 |
| Elektrischer Widerstand | Ohm.cm | 0,25 |
| Zündpunkt | °C | 320 ± 20 |
| Druckfestigkeit | daN/cm² | - - - |

Ascheschmelzverhalten in schwach reduzierender Atmosphäre:

| | | |
|---|---|---|
| Sinterpunkt | °C | ca. 1.050 |
| Erweichungspunkt | °C | ca. 1.440 |
| Halbkugelpunkt | °C | ca. 1.560 |
| Schmelzpunkt | °C | ca. 1.620 |

und gekennzeichnet durch das Produkt aus Melassezahl mal Jodzahl dividiert durch 1000 gleich 350 bis 1000 und das Produkt aus Melassezahl mal Methylenblautiter dividiert durch 10 gleich 500 bis 1200.

2. Verfahren zur Herstellung von Aktivkohle aus Braunkohlenkoks, der die folgenden physikalischen und chemischen Eigenschaften aufweist:

| Körnung | mm | Braunkohlenfeinkoks 0,5 - 4,0 |
|---|---|---|
| Kornzusammensetzung: | | |
| >4,00 mm | Gew.-% | - |
| 4,00 - 3,15 mm | Gew.-% | 5,0 |
| 3,15 - 2,00 mm | Gew.-% | 25,0 |
| 2,00 - 1,00 mm | Gew.-% | 48,0 |
| 1,00 - 0,50 mm | Gew.-% | 22,0 |
| <0,50 mm | Gew.-% | - |
| | | 100,0 |
| Immediatanalyse: | | |
| Wassergehalt | Gew.-% | 2,5 ± 1,5 |
| Aschegehalt | Gew.-% | 7,0 ± 1,5 |
| Fl.Bestandteile | Gew.-% | 3,0 ± 0,5 |
| Fixer Kohlenstoff | Gew.-% | 87,5 ± 3,0 |
| Heizwert (Hu) | kcal/kg | 7.150 ± 200 |
| | KJ/kg | 30.000 ± 850 |
| Elementaranalyse (waf): | | |
| Kohlenstoff | Gew.-% | 88,2 ± 1,0 |
| Wasserstoff | Gew.-% | 0,6 ± 0,2 |
| Schwefel | Gew.-% | 0,4 ± 0,15 |
| Sauerstoff } Stickstoff | Gew.-% | 0,8 ± 0,4 |

Oxidanalyse der Koksasche:

| | | |
|---|---|---|
| $SiO_2$ | Gew.-% | 6,0 ± 4,0 |
| $Al_2O_3$ | Gew.-% | 6,0 ± 3,0 |
| $Fe_2O_3$ | Gew.-% | 16,0 ± 8,0 |
| $SO_3$ | Gew.-% | 16,0 ± 4,0 |
| CaO | Gew.-% | 37,5 ± 7,5 |
| MgO | Gew.-% | 16,0 ± 4,0 |
| $Na_2O$ | Gew.-% | 2,5 ± 1,0 |
| $K_2O$ | Gew.-% | |

Physikalische Kennziffern:

| | | |
|---|---|---|
| Wahre Dichte | g/cm³ | 1,75 ± 0,1 |
| Schüttdichte | g/cm³ | 0,50 ± 0,05 |
| Spezifische Oberfläche | m²/g | 200 ± 50 |
| Reaktionsfähigkeit | cm³ $CO_2$/g.sec | 2,8 |
| Elektrischer Widerstand | Ohm.cm | 0,25 |
| Zündpunkt | °C | 320 ± 20 |
| Druckfestigkeit | daN/cm² | - - - |

Ascheschmelzverhalten in schwach reduzierender Atmosphäre:

| | | |
|---|---|---|
| Sinterpunkt | °C | ca. 1.050 |
| Erweichungspunkt | °C | ca. 1.440 |
| Halbkugelpunkt | °C | ca. 1.560 |
| Schmelzpunkt | °C | ca. 1.620 |

bei der das Produkt aus Melassezahl mal Jodzahl dividiert durch 1000 gleich 350 bis 1000 und das Produkt aus Melassezahl mal Methylenblautiter dividiert durch 10 gleich 500 bis 1200 beträgt, wobei man Braunkohlenkoks mit Wasserdampf in einem Drehrohr aktiviert und während der Aktivierungsphase wässrige Alkali- oder Erdalkalicarbonatlösung und/oder wässrige Alkali- oder Erdalkalihydroxidlösung mittels einer Lanze in das Drehrohr einsprüht, wobei die Aktivierungstemperaturen in Fließrichtung des Aktivates (Braunkohlenkoks) im vorderen Teil des Drehrohrofens zwischen 900 und 1045 °C, im mittleren Teil zwischen 905 und 1055 °C und im hinteren Teil zwischen 880 und 995 °C liegen.

3. Verfahren nach Anspruch 2, dadurch gekennzeichnet, daß man als Alkalicarbonat Kaliumcarbonat bzw. als Alkalihydroxid Kalimhydroxid verwendet.

4. Verfahren nach Anspruch 2 oder 3, dadurch gekennzeichnet, daß die Kaliumkonzentration, bezogen auf die eingesetzte Braunkohle, 1,0 bis 8,0 Gew.-% beträgt.

## Claims

1. Active carbon produced from lignite coke which has the following physical and chemical properties:

| Grain size | mm | Lignite fine coke 0.5 - 4.0 |
|---|---|---|
| Grain composition: | | |
| >4.00 mm | % by weight | - |
| 4.00 - 3.15 mm | % by weight | 5.0 |
| 3.15 - 2.00 mm | % by weight | 25.0 |
| 2.00 - 1.00 mm | % by weight | 48.0 |
| 1.00 - 0.50 mm | % by weight | 22.0 |
| <0.50 mm | % by weight | - |
| | | 100.0 |
| Immediate analysis: | | |
| Water content | % by weight | 2.5 ± 1.5 |
| Ash content | % by weight | 7.0 ± 1.5 |
| Vol. constituents | % by weight | 3.0 ± 0.5 |
| Fixed carbon | % by weight | 87.5 ± 3.0 |
| Calorific value (Hu) | kcal/kg | 7,150 ± 200 |
| | KJ/kg | 30,000 ± 850 |
| Elemental analysis (waf): | | |
| Carbon | % by weight | 88.2 ± 1.0 |
| Hydrogen | % by weight | 0.6 ± 0.2 |
| Sulfur | % by weight | 0.4 ± 0.15 |
| Oxygen ) | % by weight | |
| ) | | 0.8 ± 0.4 |
| Nitrogen) | % by weight | |
| Oxide analysis of coke ash: | | |
| $SiO_2$ | % by weight | 6.0 ± 4.0 |
| $Al_2O_3$ | % by weight | 6.0 ± 3.0 |

| | | |
|---|---|---|
| $Fe_2O_3$ | % by weight | 16.0 ± 8.0 |
| $SO_3$ | % by weight | 16.0 ± 4.0 |
| CaO | % by weight | 37.5 ± 7.5 |
| MgO | % by weight | 16.0 ± 4.0 |
| $Na_2O$) | % by weight | |
| ) | | 2.5 ± 1.0 |
| $K_2O$ ) | % by weight | |

| | | |
|---|---|---|
| Physical characteristics: | | |
| True density | $g/cm^3$ | 1.75 ± 0.1 |
| Apparent density | $g/cm^3$ | 0.50 ± 0.05 |
| Specific surface | $m^2/g$ | 200 ± 50 |
| Reactivity | $cm^3$ $CO_2$/g.sec | 2.8 |
| Electrical resistance | Ohm.cm | 0.25 |
| Ignition point | °C | 320 ± 20 |
| Compressive strength | $daN/cm^2$ | - - - |

| | | |
|---|---|---|
| Ash melting behaviour in a slightly reducing atmosphere: | | |
| Sinter point | °C | approx. 1,050 |
| Softening point | °C | approx. 1,440 |
| Hemisphere point | °C | approx. 1,560 |
| Melting point | °C | approx. 1,620 |

and characterized by the product of molasses value times iodine value divided by 1,000 equals 350 to 1,000 and the product of molasses value times methylene blue titre divided by 10 equals 500 to 1,200.

2. A process for the production of active carbon from lignite coke which has the following physical and chemical properties:

| | | Lignite fine coke |
|---|---|---|
| Grain size | mm | 0.5 - 4.0 |
| Grain composition: | | |
| >4.00 mm | % by weight | - |

| | | |
|---|---|---|
| 4.00 - 3.15 mm | % by weight | 5.0 |
| 3.15 - 2.00 mm | % by weight | 25.0 |
| 2.00 - 1.00 mm | % by weight | 48.0 |
| 1.00 - 0.50 mm | % by weight | 22.0 |
| <0.50 mm | % by weight | - |
| | | 100.0 |

Immediate analysis:

| | | |
|---|---|---|
| Water content | % by weight | 2.5 ± 1.5 |
| Ash content | % by weight | 7.0 ± 1.5 |
| Vol. constituents | % by weight | 3.0 ± 0.5 |
| Fixed carbon | % by weight | 87.5 ± 3.0 |
| Calorific value (Hu) | kcal/kg | 7,150 ± 200 |
| | KJ/kg | 30,000 ± 850 |

Elemental analysis (waf):

| | | |
|---|---|---|
| Carbon | % by weight | 88.2 ± 1.0 |
| Hydrogen | % by weight | 0.6 ± 0.2 |
| Sulfur | % by weight | 0.4 ± 0.15 |
| Oxygen ) Nitrogen) | % by weight | 0.8 ± 0.4 |

Oxide analysis of coke ash:

| | | |
|---|---|---|
| $SiO_2$ | % by weight | 6.0 ± 4.0 |
| $Al_2O_3$ | % by weight | 6.0 ± 3.0 |
| $Fe_2O_3$ | % by weight | 16.0 ± 8.0 |
| $SO_3$ | % by weight | 16.0 ± 4.0 |
| CaO | % by weight | 37.5 ± 7.5 |
| MgO | % by weight | 16.0 ± 4.0 |
| $Na_2O$) $K_2O$ ) | % by weight | 2.5 ± 1.0 |

Physical characteristics:

| | | |
|---|---|---|
| True density | $g/cm^3$ | 1.75 ± 0.1 |
| Apparent density | $g/cm^3$ | 0.50 ± 0.05 |
| Specific surface | $m^2/g$ | 200 ± 50 |
| Reactivity | $cm^3$ $CO_2$/g.sec | 2.8 |
| Electrical resistance | Ohm.cm | 0.25 |
| Ignition point | °C | 320 ± 20 |
| Compressive strength | $daN/cm^2$ | - - - |

Ash melting behviour in a slightly reducing atmosphere:

| | | |
|---|---|---|
| Sinter point | °C | approx. 1,050 |
| Softening point | °C | approx. 1,440 |
| Hemisphere point | °C | approx. 1,560 |
| Melting point | °C | approx. 1,620 |

in which the product of molasses value times iodine value divided by 1,000 equals 350 to 1,000 and the product of molasses value times methylene blue titre divided by 10 equals 500 to 1,200, lignite being activated with steam in a revolving tube and aqueous alkali or alkaline earth carbonate solution and/or aqueous alkali or alkaline earth hydroxide solution being sprayed into the revolving tube by means of a lance during the activation phase, the activation temperatures in the direction of flow of the activate (lignite coke) being between 900 and 1045°C in the front section, between 905 and 1055°C in the middle section and between 880 and 995°C in the rear section.

**3.** A process as claimed in claim 2, characterized in that potassium carbonate is used as the alkali carbonate and potasssium hydroxide is used as the alkali hydroxide.

**4.** A process as claimed in claim 2 or 3, characterized in that the potassium concentration, based on the lignite used, is from 1.0 to 8.0% by weight.

**Revendications**

**1.** Charbon actif obtenu à partir de coke de lignite qui possède les propriétés physiques et chimiques suivante :

| | | Coke fin de lignite |
|---|---|---|
| Granulométrie | mm | 0,5 - 4,0 |
| **Composition du grain** | | |
| >4,00 mm | -% en poids | - |
| 4,00 - 3,15 mm | -% " | 5,0 |
| 3,15 - 2,00 mm | -% " | 25,0 |
| 2,00 - 1.00 mm | -% " | 48,0 |
| 1,00 - 0,50 mm | -% " | 22,0 |
| - <0,50 mm | -% " | - |
| | | 100,0 |
| **Analyse immédiate** | | |
| Teneur en eau | -% en poids | 2,5 ± 1,5 |
| Teneur en cendres | -% " | 7,0 ± 1,5 |
| Constituants volatils | -% " | 3,0 ± 0,5 |
| Carbone fixe | -% " | 87,5 ± 3,0 |
| Valeur de chauffage (Hu) | kcal/kg | 7.150 ± 200 |
| | KJ/kg | 30.000 ± 850 |
| **Analyse élémentaire (H)** | | |
| Carbone | -% en poids | 88,2 ± 1,0 |
| Hydrogène | -% " | 0,6 ± 0,2 |
| Soufre | -% " | 0,4 ± 0,15 |
| Oxygène | -% " | 0,8 ± 0,4 |
| Azote | -% " | " " |

Analyse des oxydes des Cendres

| | | |
|---|---|---|
| $SiO_2$ | -% en poids | 6,0 ± 4,0 |
| $Al_2O_3$ | -% " | 6,0 ± 3,0 |
| $Fe_2O_3$ | -% " | 16,0 ± 8,0 |
| $SO_3$ | -% " | 16,0 ± 4,0 |
| CaO | -% " | 37,5 ± 7,5 |
| MgO | -% " | 16,0 ± 4,0 |
| $Na_2O$ | -% " | 2,5 ± 1,0 |
| $K_2O$ | -% " | " " |

Caractéristiques physiques

| | | |
|---|---|---|
| Densité vraie | $g/cm^3$ | 1,75 ± 0,1 |
| Densité apparente | $g/cm^3$ | 0,50 ± 0,05 |
| Surface spécifique | $m^2/g$ | 200 ± 50 |
| Capacité de réaction | $cm^3 CO_2/g.sec$ | 2,8 |
| Résistance électrique | Ohm.cm | 0,25 |
| Point d'éclair | °C | 320 ± 20 |
| Résistance à la pression | $daN/cm^2$ | - - - |

Comportement des cendres en atmosphère faiblement réductrice

| | | |
|---|---|---|
| Point de frittage | °C | ca. 1.050 |
| Point de ramollissement | °C | ca. 1.440 |
| Point de demi-bille | °C | ca. 1.560 |
| Point de fusion | °C | ca. 1.620 |

et caractérisé par le produit de l'indice de mélasse multiplié par l'indice d'iode et divisé par 1000 est égal à 350 à 1000 et par le produit de l'indice de mélasse par le titre en bleu de méthylène divisé par 10 est égal à 500 à 1200.

**2.** Procédé d'obtention de charbon actif à partir de coke de lignite, qui possède les propriétés physiques et chimiques suivantes :

| | | | Coke fin de lignite |
|---|---|---|---|
| Granulométrie | | mm | 0,5 - 4,0 |
| **Composition du grain** | | | |
| >4,00 mm | -% en poids | | - |
| 4,00 - 3,15 mm | -% | " | 5,0 |
| 3,15 - 2,00 mm | -% | " | 25,0 |
| 2,00 - 1.00 mm | -% | " | 48,0 |
| 1,00 - 0,50 mm | -% | " | 22,0 |
| - <0,50 mm | -% | " | - |
| | | | 100,0 |
| **Analyse immédiate** | | | |
| Teneur en eau | -% en poids | | 2,5 ± 1,5 |
| Teneur en cendres | -% | " | 7,0 ± 1,5 |
| Constituants volatils | -% | " | 3,0 ± 0,5 |
| Carbone fixe | -% | " | 87,5 ± 3,0 |
| Valeur de chauffage (Hu) | kcal/kg | | 7.150 ± 200 |
| | KJ/kg | | 30.000 ± 850 |
| **Analyse élémentaire (H)** | | | |
| Carbone | -% en poids | | 88,2 ± 1,0 |
| Hydrogène | -% | " | 0,6 ± 0,2 |
| Soufre | -% | " | 0,4 ± 0,15 |
| Oxygène | -% | " | 0,8 ± 0,4 |
| Azote | -% | " | - - |

Analyse des oxydes des Cendres de coke

| | | |
|---|---|---|
| $SiO_2$ | -% en poids | 6,0 ± 4,0 |
| $Al_2O_3$ | -% " | 6,0 ± 3,0 |
| $Fe_2O_3$ | -% " | 16,0 ± 8,0 |
| $SO_3$ | -% " | 16,0 ± 4,0 |
| CaO | -% " | 37,5 ± 7,5 |
| MgO | -% " | 16,0 ± 4,0 |
| $Na_2O$ | -% " | 2,5 ± 1,0 |
| $K_2O$ | -% " | - - |

Caractéristiques physiques

| | | |
|---|---|---|
| Densité vraie | $g/cm^3$ | 1,75 ± 0,1 |
| Densité apparente | $g/cm^3$ | 0,50 ± 0,05 |
| Surface spécifique | $m^2/g$ | 200 ± 50 |
| Capacité de réaction | $cm^3 CO_2/g.sec$ | 2,8 |
| Résistance électrique | Ohm.cm | 0,25 |
| Point d'éclair | °C | 320 ± 20 |
| Résistance à la pression | $daN/cm^2$ | - - - |

Comportement des cendres en atmosphère faiblement réductrice

| | | |
|---|---|---|
| Point de frittage | °C | ca. 1.050 |
| Point de ramollissement | °C | ca. 1.440 |
| Point de demi-bille | °C | ca. 1.560 |
| Point de fusion | °C | ca. 1.620 |

pour lequel le produit de l'indice de mélasse par l'indice d'iode divisé par 1000 est égal à 350 à 1000 et le produit de l'indice de mélasse par le titre en bleu de méthylène divisé par 10 s'élève à 500 à 1000 - dans lequel on active du coke de lignite avec de la vapeur d'eau dans un tube rotatif et pendant la phase d'activation on pulvérise, dans le tube rotatif à l'aide d'une lance, une solution aqueuse de carbonate alcalin ou alcalino-terreux et/ou une solution aqueuse d'hydroxyde alcalin ou alcalino-terreux, procédé dans lequel la température d'activation se situe dans la direction d'écoulement du produit activé (coke de lignite) dans la partie antérieure du four à tube rotatif entre 900 et 1045 °C, dans la partie moyenne entre 905 et 1055 °C et dans la partie postérieure entre 880 et 995 °C.

3. Procédé selon la revendication 2 caractérisé en ce que l'on utilise comme carbonate alcalin, du carbonate de potassium ou comme hydroxyde alcalin, de l'hydroxyde de potassium.

4. Procédé selon les revendications 2 ou 3, caractérisé en ce que la concentration en potassium rapportée au lignite mis en jeu, s élève à 1,0 à 8 % en poids.